(19) Europäisches Patentamt
European Patent Office
Office européen des brevets

(11) Veröffentlichungsnummer : **0 149 971**
**B1**

(12) # EUROPÄISCHE PATENTSCHRIFT

(45) Veröffentlichungstag der Patentschrift : **28.09.88**

(51) Int. Cl.⁴ : **C 08 G 59/40**, H 01 B 3/40

(21) Anmeldenummer : **84810547.4**

(22) Anmeldetag : **12.11.84**

(54) **Verwendung von Einkomponenten-Epoxidharz-Beschichtungsmaterialien zum Beschichten von feststehenden Widerständen.**

(30) Priorität : **17.11.83 GB 8330649**

(43) Veröffentlichungstag der Anmeldung : **31.07.85 Patentblatt 85/31**

(45) Bekanntmachung des Hinweises auf die Patenterteilung : **28.09.88 Patentblatt 88/39**

(84) Benannte Vertragsstaaten : **CH DE FR GB IT LI NL SE**

(56) Entgegenhaltungen :
**FR-A- 1 566 819**
**US-A- 2 847 395**
**US-A- 3 087 910**
**US-A- 3 294 748**
**US-A- 4 268 656**
**CHEMICAL ABSTRACTS, Band 101, Nr. 12, 17. September 1984, Seite 55, Nr. 92236m, Columbus, Ohio, US; & JP - A - 59 49224 (HITACHI CHEMICAL CO., LTD.) 21.03.1984**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Anzai, Kenji**
**2-12, Sumiyoshidai Higashi Nada-ku**
**Kobe-shi Hyogo (JP)**
Erfinder : **Hamabe, Tatsuo**
**13-1403, No. 7 Shinmori 1-chome**
**Asahi-ku Osaka (JP)**
Erfinder : **Watanabe, Ichiro**
**1-25-208, 4-chome, Naruo-cho**
**Nishinomiya-city Hyogo (JP)**
Erfinder : **Naganuma, Yoshiaki**
**9-1-307, Gendara Tsunematsu**
**Amagasaki-city Hyogo (JP)**

**EP 0 149 971 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft die Verwendung bestimmter Einkomponenten-Epoxidharz-Beschichtungsmaterialien zum Beschichten von feststehenden Widerständen und die mit dem genannten Einkomponenten-Epoxidharz-Beschichtungsmaterial beschichteten feststehenden Widerstände.

Für das erfolgreiche Beschichten elektronischer Bauteile sind gute elektrische, mechanische und thermische Eigenschaften, besonders gute Hitzebeständigkeit, niedrige Wasseraufnahme sowie gute Rissbeständigkeit und gute Beständigkeit beim Kochen unter Druck (pressure cooker test) wesentliche Voraussetzungen. Es ist bekannt, dass elektrische Isolierbeschichtungsmaterialien auf der Basis von Epoxidharzsystem sich dank ihrer guten elektrischen, mechanischen und thermischen Eigenschaften zum Herstellen von Isolier- und Schutzüberzügen auf elektronischen Bauteilen, wie feststehenden Kohleschicht- und Metallschicht-Widerständen eignen. Bekannte Zweikomponenten-Systeme für Isolierzwecke enthalten als Hauptharzkomponente ein Epoxidharz und als Härter-Komponente ein aromatisches Amin oder ein Säureanhydrid. Bei diesen bekannten Stoffgemischen sind die Mengen an eingesetztem Epoxidharz und Härter äusserst kritisch. Zum Erzielen homogener Mischungen, die sich z. B. zum Beschichten von feststehenden Widerständen eignen, müssen das Harz und der Härter gründlich miteinander vermischt werden. Im allgemeinen werden eine oder mehrere Schichten aufgetragen und während etwa 10 Minuten bei 160-180 °C gehärtet.

Werden die aromatischen Aminhärter oder die Säureanhydridhärter dieser Zweikomponenten-Systeme mit Epoxidharzen vermischt, so setzt schon bei Raumtemperatur eine langsame Reaktion ein, und die Viskosität des Gemisches erhöht sich innerhalb weniger Stunden auf mehr als das Doppelte der Anfangsviskosität. Die Verwendung solcher Zweikomponenten-Systeme als Beschichtungsmaterialien kann daher Schwierigkeiten verursachen. Wie oben erwähnt, ist die Topfzeit solcher Zweikomponenten-Systeme kurz (bis zu etwa 5-8 Stunden). Es kann daher vorkommen, dass die Harz- und Härterkomponenten im Verlaufe eines einzigen Tages mehrere Male dosiert, gemischt und vermengt werden müssen. Rückstände aus dem Harz/Härtergemisch müssen zudem täglich aus den Mischapparaturen, den Dosiergeräten, den Lagerbehältern und dergleichen entfernt werden, was einen erheblichen Materialverlust mit sich bringt.

Es besteht daher ein Bedürfnis nach Einkomponenten-Epoxidharz-Beschichtungsmaterialien mit verbesserter Hitz-, Riss- und Kochbeständigkeit unter Druck (pressure cooker test, PCT-Beständigkeit), mit welchen auf die zeitraubenden und unwirtschaftlichen Operationen des Dosierens, Mischens und vermengens der Harz- und Härterkomponenten verzichtet und eine ungenügende Härtung des Epoxidharzes sowie unbefriedigende Eigenschaften der gehärteten Produkte wegen fehlerhaftem Dosieren oder ungenügendem Mischen und Vermengen der Komponenten vermieden werden können.

Bisher wurden in Einkomponenten-Epoxidharz-Systemen als latente Härter Dicyandiamid, Imidazole, Bortrifluorid-Aminkomplexe, Dihydrazide, z. B. solche von Dicarbonsäuren, und Melamin verwendet. Im allgemeinen sind aber Härter, die in Kombination mit Epoxidharzen eine gute Lagerstabilität aufweisen, wenig reaktiv und benötigen zur Herstellung von voll ausgehärteten Produkten hohe Temperaturen und lange Reaktionszeiten. Hoch reaktive Härter, die in etwa 10 Minuten bei Temperaturen zwischen 160 und 180 °C eine volle Aushärtung bewirken, weisen andererseits eine geringe Lagerstabilität auf. Einige latente Härter, wie $BF_3$-Monoäthylamin und das 2,4-Diamino-6-(2-methylimidazolyl-1)äthyl-s-triazin-Isocyanurat-Addukt, weisen eine hohe Reaktivität und eine gute Lagerstabilität auf, deren Hitze- und PCT-Beständigkeit lässt jedoch zu wünschen übrig. Zum Erzielen einer höheren Reaktivität ohne Beeinträchtigung der Lagerstabilität bei Raumtemperatur wurden den Einkomponenten-Epoxidharz-Systemen auch schon Beschleuniger beigegeben. Ein bekanntes Einkomponenten-Epoxidharz-System, das als Härter Dicyandiamid und als Beschleuniger 3-(p-Chlorphenyl)-1,1-dimethylharnstoff enthält, besitzt eine gute Lagerstabilität und eine hohe Reaktivität. Es ist jedoch in Bezug auf Hitze- und PCT-Beständigkeit unbefriedigend.

Wie oben erwähnt, sind Dihydrazide verschiedener Dicarbonsäuren und auch heterocyclische Dioder Trihydrazide bekannte latente Härter für Epoxidharze ; vgl. z. B. U:S. Patentschriften 2 847 395, 3 087 910 und 4 268 656 und japanische Offenlegungsschriften Sho 57-137.317, Sho 57-137.318 und Sho 57-145.121. Als Beispiele von Dihydraziden unsubstituierter aliphatischer Dicarbonsäuren seien die folgenden erwähnt : Bernsteinsäure-, Adipinsäure, Sebazinsäure-, Dodecandicarbonsäure- und Hexadecandicarbonsäure-dihydrazid. Die Dihydrazide aliphatischer Dicarbonsäuren können auch durch Phenylgruppen substituiert sein, wie das Dihydrazid der N-Phenylimino-propandicarbonsäure und das Dihydrazid der 7,9-Diphenyl-hexadecandicarbonsäure.

Als Beispiele von Dihydraziden aromatischer Dicarbonsäuren seien das Dihydrazid der Isophthalsäure und das Dihydrazid der Hexahydroterephthalsäure genannt. Beispiele von Hydraziden mit heterocyclischen Ringen sind das 2,4-Dihydrazino-6-methylamino-s-triazin und das Trihydrazino-s-triazin. Dihydrazide aliphatischer Dicarbonsäuren weisen im allgemeinen eine gute Lagerstabilität auf, sind jedoch wenig reaktiv. Die damit gehärteten Produkte sind bezüglich Hitze- und PCT-Beständigkeit unbefriedigend. Daher eignen sich Epoxidharzsysteme, welche derartige unsubstituierte aliphatische Dihydrazide enthalten, nicht zur Herstellung von Schutzüberzügen auf elektronischen Bauteilen, wie feststehenden Widerständen. Durch Phenylgruppen substituierte Dihydrazide aliphatischer Dicarbonsäuren sind hoch

reaktiv, jedoch unbefriedigend in Bezug auf Hitze- und PCT-Beständigkeit.

Es wurde gefunden, dass ausgewählte Dihydrazide überraschenderweise die für das Beschichten von feststehenden Widerständen geltenden strengen Anforderungen bezüglich Lagerstabilität des Harz/Härter-Gemisches bei Raumtemperatur und hoher Reaktivität bei erhöhten Temperaturen sowie der Hitze-, Riss- und PCT-Beständigkeit der gehärteten Produkte zu erfüllen vermögen.

Gegenstand der Erfindung ist demnach die Verwendung eines Einkomponenten-Epoxidharz-Beschichtungsmaterials zum Beschichten von feststehenden Widerständen, wobei das Beschichtungsmaterial

(A) ein Epoxidharz oder ein Gemisch von Epoxidharzen mit mindestens einer Epoxidgruppe pro Molekül, wobei das durchschnittliche Molekulargewicht unter 500 liegt,

(B) als Härter für das Epoxidharz mindestens ein aromatisches Dicarbonsäuredihydrazid oder mindestens eine Triazinverbindung der Formel I

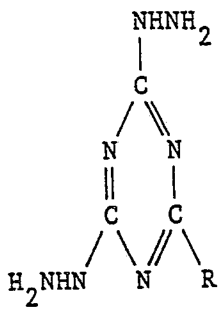

(I)

worin R eine Alkylamino- oder Dialkylaminogruppe mit 1 oder 2 C-Atomen in den Alkylgruppen, eine Phenylamino- oder Hydrazinogruppe bedeutet, oder ein Gemisch aus einem aromatischen Dicarbonsäuredihydrazid und einer Triazinverbindung der Formel I und

(C) ein Antiverlaufmittel oder einen anorganischen Füllstoff oder ein Gemisch aus Antiverlaufmittel und anorganischem Füllstoff enthält.

Gegenstand der Erfindung sind auch die beschichteten feststehenden Widerstände, die dadurch erhalten werden, dass man darauf ein Einkomponenten-Epoxidharz-Beschichtungsmaterial gemäss obiger Definition aufträgt und härtet.

Feststehende Widerstände, welche mit dem oben definierten Beschichtungsmaterial beschichtet werden sollen, können an sich beliebiger Art sein, wie feststehende Kohleschicht-Widerstände und feststehende Metallschicht-Widerstände. Die genannten Beschichtungsmaterialien können auch zum Beschichten von feststehenden Hochfrequenz-Induktoren und zum Umhüllen/Imprägnieren von gedruckten Hybrid-Schaltungen verwendet werden.

Als Epoxidharze (A) kommen z. B. solche mit durchschnittlich mehr als einer an ein Heteroatom, wie ein S- und insbesondere ein O- oder N-Atom, gebundenen Gruppe der Formel II

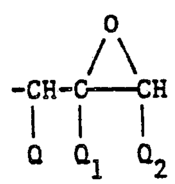

(II)

in Betracht. In Formel II sind Q und $Q_2$ je Wasserstoff und $Q_1$ ist Wasserstoff oder eine Methylgruppe, oder Q und $Q_2$ bilden zusammen eine Gruppe $—CH_2CH_2—$ oder $—CH_2CH_2CH_2—$ oder $Q_1$ ist ein Wasserstoffatom.

Beispiele derartiger Harze sind von aliphatischen und insbesondere von cycloaliphatischen oder aromatischen Polycarbonsäuren abgeleitete Polyglycidyl- und Poly(β-methylglycidyl)-ester. Geeignete Polycarbonsäuren sind z. B. Bernsteinsäure, Glutarsäure, Adipinsäure, Pimelinsäure, Azelainsäure, Sebazinsäure, Tetrahydrophthalsäure, 4-Methyltetrahydrophthalsäure, Hexahydrophthalsäure, 4-Methylhexahydrophthalsäure, Phthalsäure, Iso- und Terephthalsäure.

Ebenfalls geeignet sind Polyglycidyl- und Poly(β-methylglycidyl)-äther, die durch Umsetzung von Verbindungen mit mindestens zwei alkoholischen und/oder phenolischen Hydroxylgruppen pro Molekül mit Epichlorhydrin oder mit Allylchlorid und anschliessende Epoxidierung mit Persäuren erhalten werden. Als Polyole kommen z. B. in Betracht : Aethylenglykol, Diäthylenglykol, Poly(oxyäthylen)glykole, Propan-1,2-diol, Poly(oxypropylen)glykole, Propan-1,3-diol, Butan-1,4-diol, Pentan-1,5-diol, Hexan-1,6-diol, Hexan-2,4,6-triol, Glycerin, 1,1,1-Trimethylolpropan, Pentaerythrit ; Bis(4-hydroxycyclohexyl)-methan, 2,2-Bis(4-hydroxycyclohexyl)propan und 1,1-Bis(hydroxymethyl)cyclohex-3-en ; Resorcin, Hydrochinon, Bis(4-hydroxyphenyl)methan (Bisphenol F), 2,2-Bis(4-hydroxyphenyl)propan (Bisphenol A), 2,2-Bis(4-hydroxy-3,5-dibromphenyl)propan (Tetrabrom-Bisphenol A), 1,1,2,2-Tetrakis(4-hydroxyphenyl)äthan, 4,4'-Dihydroxybiphenyl, Bis(4-hydroxyphenyl)sulfon und Novolake aus Formaldehyd oder Acetaldehyd und Phenol, Chlorphenol oder Alkylphenolen mit bis zu 9 C-Atomen in den Alkylteilen, besonders Phenol- und Kresol-Novolake.

Geeignete Poly(N-glycidyl)-Verbindungen können durch Dehydrochlorierung von Reaktionsprodukten aus Epichlorhydrin und Aminen mit mindestens zwei Aminwasserstoffatomen erhalten werden. Als Amine eignen sich z. B. Anilin, n-Butylamin, Bis(4-aminophenyl)methan, 1,3- und 1,4-Xylylendiamin, 1,3- und 1,4-Bis(aminomethyl)cyclohexan. Triglycidylisocyanurat, N,N'-Diglycidylderivate von cyclischen Alkylenen, wie Aethylenharnstoff und 1,3-Propylenharnstoff, oder Hydantoine, wie 5,5-Dimethylhydantoin, können ebenfalls verwendet werden. Als geeignete Poly(S-glycidyl)-Verbindungen seien Di-S-glycidylderivate von Dithiolen, wie Aethan-1,2-dithiol und Bis(4-mercaptomethylphenyl) äther, genannt.

Das erfindungsgemässe Beschichtungsmaterial enthält als Komponente (A) vorzugsweise ein oder mehrere Epoxidharze auf der Basis von Bisphenol A oder Bisphenol F, ein oder mehrere cycloaliphatische Epoxidharze oder Novolak-Epoxidharze, oder Gemische derartiger Epoxidharze, wobei das durchschnittliche Molekulargewicht der genannten Epoxidharze unter 500 liegt. Besonders bevorzugt sind gegebenenfalls vorverlängerte Diglycidyläther von 2,2-Bis(4-hydroxyphenyl)propan, 2,2-Bis(3,5-dibrom-4-hydroxyphenol)propan, Bis(4-hydroxyphenyl)methan, Bis(4-hydroxycyclohexyl)methan, 2,2-Bis(4-hydroxycyclohexyl)propan und polyglycidyläther von Novolaken. Ganz besonders bevorzugt sind gegebenenfalls vorverlängerte Diglycidyläther von Bisphenol A, Tetrabrombisphenol A oder Bisphenol F, Polyglycidyläther von Phenol-Formaldehyd- und Kresol-Formaldehyd-Novolaken oder Gemische davon.

Als Verbindungen der Formel I kommen z. B. 2,4-Dihydrazino-6-methylamino-, -6-äthylamino-, -6-diäthylamino-, -6-phenylamino-s-triazin und 2,4,6-Tris-hydrazino-s-triazin in Betracht.

Als Härter (B) verwendet man vorzugsweise Isophthalsäuredihydrazid, 2,4-Dihydrazino-6-methylamino-s-triazin oder ein Gemisch dieser Verbindungen. Das Isophthalsäuredihydrazid ist besonders bevorzugt, weil damit Harz/Härter-Gemische mit guter Lagerstabilität bei Raumtemperatur und hoher Reaktivität bei erhöhten Temperaturen sowie gehärtete Produkte mit ausgezeichneter Hitze- und PCT-Beständigkeit erhalten werden.

Als Komponenten (C) können an sich beliebige bekannte Antiverlaufmittel und anorganische Füllstoffe verwendet werden. Aerosil und Bentone sind als Antiverlaufmittel bevorzugt. Geeignete anorganische Füllstoffe sind insbesondere Talk, Calciumcarbonat, Bariumcarbonat, Glimmer, Quarz, Aluminiumdioxid, Aluminiumoxid-hydrat, Bariumsulfat und Titandioxid. Die verschiedenen Antiverlaufmittel und anorganischen Füllstoffe können allein oder in Form von Gemischen verwendet werden.

Bevorzugt setzt man den Härter (B) in einer Menge von 10 bis 35 Gewichtsteilen, besonders 15 bis 30 Gewichtsteilen, bezogen auf 100 Gewichtsteile der Komponente (A), ein. Das Antiverlaufmittel wird vorzugsweise in einer Menge von 3 bis 8 Gewichtsteilen, bezogen auf 100 Gewichtsteile der Komponente (A), verwendet, während man den anorganischen Füllstoff bevorzugt in einer Menge von 20 bis 60 Gewichtsteilen, bezogen auf 100 Gewichtsteile der Komponente (A), verwendet.

Das Beschichtungsmaterial kann weitere übliche Zusätze enthalten, z. B. organische oder anorganische Flammhemmer, wie Decabromdiphenyloxid oder bromierte Epoxidharze, besonders das oben erwähnte Tetrabrom-Bisphenol A, und Antimontrioxid, Pigmente, Kupplungsmittel, Entschäumungsmittel und dergleichen.

Zur Verbesserung der Verarbeitbarkeit der definitionsgemässen Beschichtungsmaterialien und damit zu deren Viskositätserniedrigung können dem Epoxidharz (A) reaktive Verdünner beigemischt werden, wie Phenyl- und Kresyl-glycidyläther, Butandioldiglycidyläther, Hexahydrophthalsäurediglycidyläther oder Glycidylester von synthetischen hochverzweigten und zur Hauptsache tertiären aliphatischen Monocarbonsäuren, bekannt unter dem Handelsnamen « CORDURA E ». Weitere geeignete Zusätze sind Weichmacher, wie Dibutylphthalat, und organische Lösungsmittel.

Zum Beschleunigen der Härtungsreaktion, d. h. zum Erniedrigen der Härtungstemperatur oder zum Verkürzen der Härtungszeit, können dem Epoxidharz (A) gewünschtenfalls auch Härtungsbeschleuniger zugesetzt werden.

Bekannte Beschleuniger sind z. B. Imidazole, Bortrifluorid-Aminkomplexe, Natriumalkoholate, Salze von organischen Metallverbindungen, Carbonsäuren, Dicyandiamid, tertiäre Amine und Monuron [N-(4-Chlorphenyl)-N',N'-dimethylharnstoff]. Für Einkomponenten-Epoxidharz-Beschichtungsmaterialien für feststehende Widerstände sind als Beschleuniger, welche die Lagerstabilität, die Hitze-, Riss- und PCT-Beständigkeit nicht beeinträchtigen, Imidazole besonders bevorzugt.

Die erfindungsgemässen Beschichtungsmaterialien können im allgemeinen innerhalb von etwa 10 Minuten bei Temperaturen zwischen etwa 160 und 180 °C gehärtet werden. Die erfindungsgemässen Einkomponenten-Beschichtungsmaterialien können nach an sich bekannten Methoden hergestellt werden, z. B. durch Kneten, Mischen und Mahlen der verschiedenen Komponenten mittels üblicher Apparaturen, wie Knetern, Dreiwalzenstühlen und dergleichen.

Die Erfindung wird in den folgenden Beispielen näher erläutert.

## Beispiel 1

100 Gewichtsteile (Gew.t.) ARALDIT GY 260 (ein Epoxidharz auf der Basis von Bisphenol A mit einem

Epoxidäquivalentgewicht von 180-200 g/Aequivalent und einer Viskosität von 12 000-16 000 mPas bei 25 °C), 25,7 Gew.t. Isophthalsäuredihydrazid (der Fa. Japan Hydrazine Company, Inc.), 4 Gew.t. Aerosil RY 200® (der Fa. Nippon Aerosil Co., Ltd.), 10 Gew.t. Titandioxid R 820® (der Fa. Ishihara Sangyo Co. Ltd.) und 20 Gew.t. Talk MS® (der Fa. Nippon Talc Co., Ltd.), werden zuerst in einem Kneter gemischt, dann gemahlen und auf einem Dreiwalzenstuhl gründlich vermengt (zwei Durchgänge auf dem Dreiwalzenstuhl). Mit dem dabei erhaltenen Einkomponenten-Epoxidharz-Beschichtungsmaterial werden feststehende Widerstände (feststehende Kohleschicht-Widerstands-Elemente) beschichtet und 10 Minuten bei 180 °C gehärtet. Die Lagerstabilität und die weiteren Eigenschaften der gehärteten Beschichtung werden wie folgt geprüft :

(a) Feuchtigkeitsbeständigkeit (Kochen unter Druck, PCT-Beständigkeit) : Feststehende Kohleschicht-Widerstandselemente werden bei M Omega/1/4 W mit dem obigen Material beschichtet. Nach dem Härten werden die Widerstände in einem Druck-Kochgerät (Typ TC-242 der Fa. Hirayama Manufacturing Co., Ltd.) angeordnet. Während 16 Stunden wird kontinuierlich ohne Unterbruch bei 120 °C und 2,1 bar eine Stromspannung von 300 V Gleichstrom angelegt. Der Anfangswiderstand und der Widerstand nach der Prüfung werden mit einem Digital-Multimeter (Typ TR-6841 der Fa. Takeda Riken Co., Ltd.) gemessen. Die Differenz zwischen den Widerstandsmessungen vor und nach der Prüfung wird berechnet und in % des Anfangswiderstands ausgedrückt. Diese Prüfung ist ein Mass für die eingetretene Korrosion.

(b) Elektrische Ueberbelastung (Ein- und Ausschalt-Prüfung) : Feststehende Kohleschicht-Widerstandselemente werden bei 1 K Omega/1/4 W beschichtet. Nach dem Härten wird an den Widerstand während 1 Sekunde eine Stromspannung von 63,2 V Wechselstrom angelegt, was viermal höher ist als die berechnete maximale Stromspannung, gefolgt von einer 25-sekündigen Pause ohne Stromspannung. Dabei steigt die Temperatur der Widerstandsoberfläche beim Einschalten des Stroms sehr stark an (über 200 °C) und erniedrigt sich rasch auf Temperaturen unter 50 °C, wenn der Strom abgeschaltet wird. Dieser Zyklus wird bis zu 10 000x wiederholt. Anschliessend wird das Aussehen der Beschichtung mit blossem Auge und durch ein Stereo-Mikroskop beurteilt und zwar besonders im Hinblick auf entstandene Risse.

(c) Hitzebeständigkeit : Die Glasumwandlungstemperatur (Tg) des gehärteten Materials wird mit einem Differential-Thermoanalyse-Gerät (Mettler TA 2000) bestimmt.

(d) Lagerstabilität : Es wird die Zeit bis zur Verdoppelung der Viskosität des bei 25 °C gehaltenen Einkomponenten-Epoxidharz-Beschichtungsmaterials bestimmt (mittels eines Typ B Viskosimeters der Fa. Tokyo Keiki Ltd., Japan).

## Beispiel 2

100 Gew.t. ARALDIT GY 260, 22,4 Gew.t. 2,4-Dihydrazino-6-methylamino-6-triazin (der Fa. Japan Hydrazine Company Ltd.), 4 Gew.t. Aerosil RY 200, 10 Gew.t. Titandioxid R 820 und 20 Gew.t. Talk MS werden wie in Beispiel 1 beschrieben in einem Kneter und auf einem Dreiwalzenstuhl gründlich gemischt. Mit dem erhaltenen Einkomponenten-Epoxidharz-Beschichtungsmaterial werden feststehende Widerstände beschichtet und 10 Minuten bei 180 °C gehärtet. Die Lagerstabilität und die weiteren Eigenschaften des gehärteten Films werden wie in Beispiel 1 beschrieben geprüft. Die Resultate sind im folgenden zusammengefasst :

| | Beschichtungsmaterial gemäss Beispiel 1 | Beschichtungsmaterial gemäss Beispiel 2 |
|---|---|---|
| (a) Feuchtigkeitsbeständigkeit*) Differenz zwischen Anfangswiderstand und Widerstand nach der Prüfung (%) | 3,0 | 4,0 |
| (b) elektrische Ueberbelastung (Ein- und Ausschaltprüfung) Aussehen: Farbveränderung | keine Veränderung | keine Veränderung |
| Rissbildung | keine Rissbildung | keine Rissbildung |
| (c) Hitzebeständigkeit Tg (°C) | 177 | 170 |
| (d) Lagerstabilität (25°C) | 3 Monate | 3 Monate. |

*) Im allgemeinen ist bei der in Beispiel 1 beschriebenen Prüfung eine Differenz von weniger als 5 % erwünscht.

Aus den obigen Ergebnissen geht hervor, dass sich die erfindungsgemässen Beschichtungsmaterialien durch gute Lagerstabilität und hohe Reaktivität bei erhöhten Temperaturen auszeichnen und Beschichtungen mit guter Hitze-, Feuchtigkeits-(PCT)- und Rissbeständigkeit ergeben.

**Patentansprüche**

1. Verwendung eines Einkomponenten-Epoxidharz-Beschichtungsmaterials zum Beschichten von feststehenden Widerständen, dadurch gekennzeichnet, dass das Beschichtungsmaterial

(A) ein Epoxidharz oder ein Gemisch von Epoxidharzen mit mindestens einer Epoxidgruppe pro Molekül, wobei das durchschnittliche Molekulargewicht unter 500 liegt,

(B) als Härter für das Epoxidharz mindestens ein aromatisches Dicarbonsäuredihydrazid oder mindestens eine Triazinverbindung der Formel I

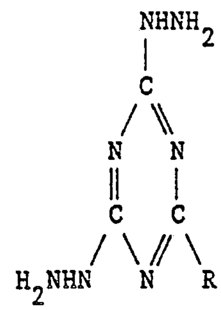

(I)

worin R eine Alkylmino- oder Dialkylaminogruppe mit 1 oder 2 C-Atomen in den Alkylgruppen, eine Phenylamino- oder Hydrazinogruppe darstellt, oder ein Gemisch aus einem aromatischen Dicarbonsäuredihydrazid und einer Triazinverbindung der Formel I und

(C) ein Antiverlaufmittel oder einen anorganischen Füllstoff oder ein Gemisch aus Antiverlaufmittel und anorganischem Füllstoff enthält.

2. Verwendung nach Anspruch 1, worin das Beschichtungsmaterial als Komponente (A) ein oder mehrere Epoxidharze auf der Basis von Bisphenol A oder Bisphenol F, ein oder mehrere cycloaliphatische Epoxidharze oder Novolak-Epoxidharze oder ein Gemisch solcher Epoxidharze enthält, wobei das durchschnittliche Molekulargewicht der Epoxidharze unter 500 liegt.

3. Verwendung nach Anspruch 1, worin das Beschichtungsmaterial als Komponente (B) Isophthalsäuredihydrazid, 2,4-Dihydrazino-6-methylamino-s-triazin oder ein Gemisch dieser Verbindungen enthält.

4. Verwendung nach Anspruch 1, worin das Beschichtungsmaterial als Antiverlaufmittel Aerosil oder ein Beton und als anorganischen Füllstoff Talk, Calciumcarbonat, Bariumcarbonat, Glimmer, Quarz, Aluminiumdioxid, Aluminiumoxidhydrat, Bariumsulfat oder Titandioxid oder ein Gemisch dieser Antiverlaufmittel oder anorganischen Füllstoffe enthält.

5. Verwendung nach einem der Ansprüche 1-4, worin das Beschichtungsmaterial 10-35 Gewichtsteile Komponente (B), 3-8 Gewichtsteile Antiverlaufmittel und 20-60 Gewichtsteile anorganischen Füllstoff, bezogen auf 100 Gewichtsteile Komponente (A), enthält.

6. Beschichtete feststehende Widerstände, worin das Beschichtungsmaterial

(A) ein Epoxidharz oder ein Gemisch von Epoxidharzen mit mindestens einer Epoxidgruppe pro Molekül,

(B) als Härter für das Epoxidharz mindestens ein aromatisches Dicarbonsäuredihydrazid oder mindestens eine Triazinverbindung der Formel I

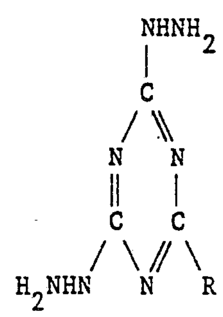

(I)

worin R eine Alkylamino- oder Dialkylaminogruppe mit 1 oder 2 C-Atomen in den Alkylgruppen, eine Phenylamino- oder Hydrazinogruppe darstellt, oder ein Gemisch aus einem aromatischen Dicarbonsäuredihydrazid und einer Triazinverbindung der Formel I und

(C) ein Antiverlaufmittel oder einen anorganischen Füllstoff oder ein Gemisch aus Antiverlaufmittel und anorganischem Füllstoff enthält.

**Claims**

1. The use of a one-component epoxy resin coating material for coating fixed resistors, characterized in that the coating material contains

(A) an epoxy resin or a mixture of epoxy resins having at least one epoxy group per molecule, the average molecular weight being less than 500,

(B) as a hardener for the epoxy resin at least one aromatic dicarboxylic acid dihydrazide or at least one triazine compound of the formula I

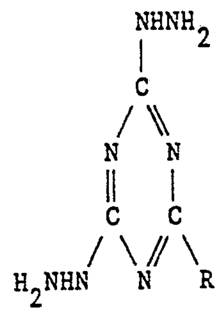

(I)

wherein R represents an alkylamino or dialkylamino group having 1 or 2 carbon atoms in the alkyl moieties, or a phenylamino or hydrazino group, or a mixture of an aromatic dicarboxylic acid dihydrazide and a triazine compound of the formula I, and

(C) an anti-sagging agent or an inorganic filler or a mixture of antisagging agent and an inorganic filler.

2. The use as claimed in claim 1, wherein the coating material contains as component (A) one or more epoxy resins based on bisphenol A or bisphenol F, one or more cycloaliphatic epoxy resins or novolac epoxy resins, or a mixture of such epoxy resins, the average molecular weight of the epoxy resins being less than 500.

3. The use as claimed in claim 1 wherein the coating material contains as component (B) isophthalic acid dihydrazide, 2,4-dihydrazino-6-methylamino-s-triazine or a mixture of these compounds.

4. The use as claimed in claim 1, wherein the coating material contains as anti-sagging agent Aerosil or Bentone and as inorganic filler talcum, calcium carbonate, barium carbonate, mica, quartz, aluminium dioxide, hydrated alumina, barium sulfate or titanium dioxide, or a mixture of said anti-sagging agents or inorganic fillers.

5. The use as claimed in any one of claims 1 to 4, wherein the coating material contains from 10 to 35 parts by weight of component (B), from 3 to 8 parts by weight of anti-sagging agent, and from 20 to 60 parts by weight of an inorganic filler, calculated on 100 parts by weight of component (A).

6. Coated fixed resistors, wherein the coating material contains

(A) an epoxy resin or a mixture of epoxy resins having at least one epoxy group per molecule,

(B) as a hardener for the epoxy resin at least one aromatic dicarboxylic acid dihydrazide or at least one triazine compound of the formula I

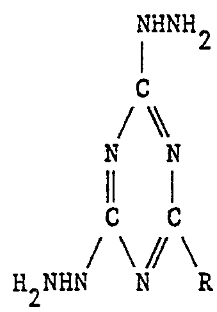

(I)

wherein R represents an alkylamino or dialkylamino group having 1 or 2 carbon atoms in the alkyl moieties, or a phenylamino or hydrazino group, or a mixture of an aromatic dicarboxylic acid dihydrazide and a triazine compound of the formula I, and

(C) an anti-sagging agent or an inorganic filler or a mixture of anti-sagging agent and inorganic filler.

**Revendications**

1. Application d'une matière de revêtement à base d'une résine époxydique et à une seule composante pour le revêtement de résistances fixes, application caractérisée en ce que la matière de revêtement contient :

(A) une résine époxydique ou un mélange de résines époxydiques à au moins un radical époxy par molécule et dont la masse moléculaire moyenne est inférieure à 500,

(B) comme durcisseur pour la résine époxydique, au moins un dihydrazide d'acide dicarboxylique aromatique ou au moins un composé triazinique répondant à la formule I :

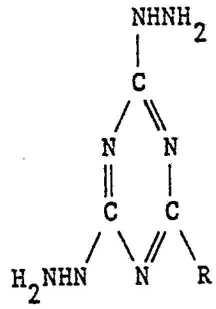

(I)

dans laquelle R représente un radical alkylamino ou dialkylamino dont l'alkyle ou chacun des alkyles contient 1 ou 2 atomes de carbone, un radical phénylamino ou un radical hydrazino, ou un mélange d'un dihydrazide d'acide dicarboxylique aromatique et d'un composé triazinique de formule I, et

(C) un agent anti-écoulement ou une charge minérale, ou un mélange d'un agent anti-écoulement et d'une charge minérale.

2. Application selon la revendication 1 caractérisée en ce que la matière de revêtement contient, comme composante (A), une ou plusieurs résines époxydiques à base de bis-phénol A ou de bis-phénol F, une ou plusieurs résines époxydiques cycloaliphatiques ou une ou plusieurs résines époxydiques à base de novolaques, ou un mélange de telles résines époxydiques, la masse moléculaire moyenne de chacune des résines époxydiques étant inférieure à 500.

3. Application selon la revendication 1 dans laquelle la matière de revêtement contient, comme composante (B), du dihydrazide de l'acide isophtalique, de la dihydrazino-2,4 méthylamino-6 triazine-1,3,5 ou un mélange de ces composés.

4. Application selon la revendication 1 dans laquelle la matière de revêtement contient, comme agent anti-écoulement, de l'Aerosil ou une Bentone et, comme charge minérale, du talc, du carbonate de calcium, du carbonate de baryum, du mica, du quartz, de l'alumine, de l'alumine hydratée, du sulfate de baryum ou du dioxyde de titane, ou un mélange de ces agents anti-écoulement ou charges minérales.

5. Application selon l'une quelconque des revendications 1 à 4, dans laquelle la matière de revêtement contient de 10 à 35 parties en poids de la composante (B), de 3 à 8 parties en poids de l'agent anti-écoulement et de 20 à 60 parties en poids d'une charge minérale, pour 100 parties en poids de la composante (A).

6. Résistances fixes revêtues, caractérisées en ce que la matière de revêtement contient :

(A) une résine époxydique ou un mélange de résines époxydiques à au moins un radical époxy par molécule,

(B) comme durcisseur pour la résine époxydique, au moins un dihydrazide d'acide dicarboxylique aromatique ou au moins un composé triazinique répondant à la formule I :

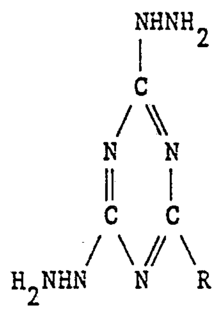

(I)

dans laquelle R représente un radical alkylamino ou dialkylamino dont l'alkyle ou chacun des alkyles contient 1 ou 2 atomes de carbone, un radical phénylamino ou un radical hydrazino, ou un mélange d'un dihydrazide d'acide dicarboxylique aromatique et d'un composé triazinique de formule I, et

(C) un agent anti-écoulement ou une charge minérale, ou un mélange d'un agent anti-écoulement et d'une charge minérale.